# EUROPÄISCHE PATENTSCHRIFT

(11) **EP 2 593 682 B1**
(45) Veröffentlichungstag und Bekanntmachung des Hinweises auf die Patenterteilung: **19.12.2018**
(21) Anmeldenummer: 11726714.6
(22) Anmeldetag: 21.06.2011
(51) Int. Cl.: F16B 5/07, B60R 13/02

(54) **BEFESTIGUNGSSYSTEM**
FASTENING SYSTEM
SYSTÈME DE FIXATION

(30) Priorität: 16.07.2010 DE 102010027394
(43) Veröffentlichungstag der Anmeldung: 22.05.2013
(60) Teilanmeldung: 18203127.8
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2011/003046
(87) Internationale Veröffentlichungsnummer: WO 2012/007089

(56) Entgegenhaltungen:
- DE-A1-102008 007 913
- US-A- 5 058 245
- US-A- 5 242 646
- US-A- 5 429 875

## Beschreibung

Die Erfindung betrifft ein Befestigungssystem zum wieder lösbaren Festlegen eines zweiten Bauteils an einem ersten Bauteil, wie dem Anbringen eines Abdeckbauteils an einem Karosseriebauteil. Befestigungssysteme sind Stand der Technik, siehe z.B. WO 2009/097950. Ein solches Befestigungssystem dient unter anderem dazu, flächenartige Verkleidungen an vorgebbaren Stellen festzulegen, beispielsweise um unschön aussehende Stellen zu kaschieren; kann aber auch zur Wärme- und Schallisolation eingesetzt werden. So werden im Kraftfahrzeugbau beispielsweise paneelartige Abdeckbauteile eingesetzt, um Blechteile als Karosseriebauteile großflächig abzudecken. Als Karosseriebauteile können hier beispielsweise Beladetüren angesprochen sein aber auch Karosserieböden und -decken. Neben dem angesprochenen Kraftfahrzeugbereich sind solche Befestigungssysteme auch einsetzbar bei Eisenbahnen, Schiffen und Flugzeugen, wo vergleichbare Aufgabenstellungen zu lösen sind.

Dadurch, dass das Befestigungssystem eine wieder lösbare Verbindung zwischen einem zweiten Bauteil, wie einem Abdeckbauteil, und einem ersten Bauteil, wie einem Drittbauteil, ermöglicht, lassen sich beispielsweise innerhalb des Drittbauteils verlaufende technische Einrichtungen, wie Kabel, Klimakanäle, Steuerelektroniken etc. bei Bedarf gut zugänglich gestalten, indem man eben das Abdeckteil von dem Drittbauteil mit der jeweils technischen Einrichtung entfernt. Dank der Festlegung über zusammenwirkende Haftverschlussteile lassen sich derartige Maßnahmen mit verhältnismäßig geringem Arbeits- und Montageaufwand durchführen.

Die US 5 429 875 beschreibt ein Befestigungssystem zum wieder lösbaren Festlegen eines zweiten Bauteils an einem ersten Bauteil mit mindestens einem Distanzhalter, der an seiner einen Seite mittels eines ersten Befestigungsmittels am ersten Bauteil festlegbar ist und auf seiner gegenüberliegenden Seite mit einem ersten Haftverschlussteil versehen ist, das mit einem korrespondierenden zweiten Haftverschlussteil wieder lösbar in Eingriff bringbar ist, das auf seiner den Verschlusselementen abgewandten Seite mittels eines zweiten Befestigungsmittels am zweiten Bauteil festlegbar ist, wobei der Distanzhalter mittels einer das erste Befestigungsmittel bildenden Verschraubung am ersten Bauteil festlegbar ist, wobei der Distanzhalter zur Bildung der Verschraubung eine Bohrung aufweist, deren den Verschlusselementen zugewandter Öffnungsrand eine konische Erweiterung aufweist, in der der Kopf einer Senkkopfschraube so aufnehmbar ist, dass sich das obere Ende des Kopfes unterhalb der Verschlusselemente befindet.

Die US 5 058 245 A beschreibt ein Befestigungssystem, das ein plattenförmiges Haftverschlussteil aufweist, wobei das Haftverschlussteil eine Schutzeinrichtung vorzugsweise in der Art von randseitigen Platten aufweist, die eine größere Höhe haben, als die Verschlusselemente des Haftverschlussteils und daher dazu geeignet sind, ein unbeabsichtigtes Koppeln zweier derartiger Haftverschlussteile zu verhindern. Die Schutzeinrichtung verschwenkt bei einem beabsichtigten Fügen zweier Haftverschlussteile so, dass deren Verschlusselemente sich verhaken können.

Die US 5 242 646 beschreibt ein Verfahren zur Herstellung verschiedenartig geformter Verschlusselemente, wie pilzförmiger Verschlusselemente von Haftverschlussteilen, insbesondere unter Anwendung eines kontinuierlichen Verfahrens, bei dem bandförmige Haftverschlusssteile gebildet werden. Gewisse Einschränkungen hinsichtlich der Einsatzmöglichkeiten eines solchen Befestigungssystems sind lediglich in Fällen gegeben, in denen Abdeckbauteile hohen Wärmebelastungen ausgesetzt sind. Dies ist beispielsweise der Fall, wenn das Befestigungssystem für Karosseriebauteile verbaut wird, die beispielsweise im Sommer höheren Temperaturen, beispielsweise durch direkte Sonneneinstrahlung, ausgesetzt sind. Man ist daher gezwungen, die im Stand der Technik vorgesehene Klebstoffverbindung zwischen dem Distanzhalter und Bauteil, wie Karosseriebauteil, entsprechend wärmebeständig auszubilden. Bevorzugt werden diesbezüglich reaktive Klebstoffe, wie feuchtigkeitsvernetzende Polyurethan-Klebstoffe, zum Einsatz gebracht, auch können hochtemperaturbeständige Hotmelt-Klebstoffe, wie Polyamid-Klebstoffe, benutzt werden. Die Handhabung derartiger, verhältnismäßig kostenintensiver Klebstoffe, gestaltet sich verhältnismäßig zeitaufwendig. Im Hinblick hierauf liegt der Erfindung die Aufgabe zugrunde, ein Befestigungssystem der betrachteten Art zur Verfügung zu stellen, das universeller, also auch in Fällen erhöhter Wärmebelastung, vorteilhaft einsetzbar ist. Eine Lösung dieser Aufgabe besteht in einem Befestigungssystem mit den Merkmalen von Anspruch 1. Vorteilhafte Ausführungsformen der Erfindung gehen aus den Unteransprüchen hervor.

Gemäß Anspruch 1 ist vorgesehen, dass der Öffnungsrand der Bohrung von einer zur Bohrung konzentrischen Ringrippe umgeben ist, deren Höhe gleich wie oder geringer ist als die Stärke einer Trägerlage der Verschlusselemente, und dass das erste Haftverschlussteil eine die Trägerlage durchdringende, runde Öffnung aufweist, in der die Ringrippe am Öffnungsrand der Bohrung zentrierend aufnehmbar ist.

Der Distanzhalter ist mittels einer das erste Befestigungsmittel bildenden Verschraubung am ersten Bauteil festlegbar. Unter Beibehaltung der Vorteile, die ein dem Stand der Technik entsprechendes, derartiges Befestigungssystem bietet, ermöglicht die vorgesehene Verschraubung einen sicheren Einsatz auch unter Einsatzbedingungen, bei denen besondere thermische Belastungen auftreten können, ohne dass ein Bedarf an hochtemperaturfesten Klebstoffen besteht.

Hierbei ist die Anordnung so getroffen, dass der Distanzhalter zur Bildung der Verschraubung eine Bohrung aufweist, deren den Verschlusselementen zugewandter Öffnungsrand eine konische Erweiterung aufweist, in der der Kopf einer Senkkopfschraube so aufnehmbar ist, dass sich das obere Ende des Kopfes unterhalb der Verschlusselemente befindet. Bei einer derart "versenkt" ausgebildeten Verschraubung bleibt der gegenseitige Eingriff der korrespondierenden Verschlusselemente von der Verschraubung unbeeinträchtigt.

Bei besonders vorteilhaften Ausführungsbeispielen, bei denen der Distanzhalter aus einem Rahmenteil besteht, das eine rechteckförmige Kastenform hat, sowie eine Rahmenvertiefung zur bündigen Aufnahme einer Trägerlage mit den Verschlusselementen des zugeordneten ersten Haftverschlussteils, ist die Bohrung vorzugsweise im Zentralbereich der Rahmenvertiefung gebildet.

Hierbei ist die Anordnung so getroffen, dass der Öffnungsrand der Bohrung von der aus der Fläche der Rahmenvertiefung vorstehenden Ringrippe umgeben ist.

Nachstehend ist die Erfindung anhand der Zeichnung erläutert. Dabei zeigen in prinzipieller und nicht maßstäblicher Darstellung die
- Fig. 1: die stirnseitige Ansicht auf eine Beladetür eines Transportbusses;
- Fig. 2: eine stirnseitige Ansicht auf ein Abdeckbauteil, das mittels des Befestigungssystems an der Ladetür nach Fig. 1 zu befestigen ist;
- Fig. 3: in der Art einer Explosionszeichnung die wesentlichen Teile einer Ausführungsform des Befestigungssystems;
- Fig. 4 und 5: eine perspektivische Schrägansicht bzw. Draufsicht auf den gesondert dargestellten Distanzhalter der Ausführungsform von Fig. 3;
- Fig. 6: eine Schnittdarstellung des Distanzhalters mit auf dessen Rahmenvertiefung angebrachtem Haftverschlussteil;
- Fig. 7: einen vergrößert gezeichneten Teilausschnitt des in Fig. 6 mit VII bezeichneten Bezirks;
- Fig. 8: das Gewebebild eines für das Befestigungssystem eingesetzten Haftverschlussteils in Draufsicht; und
- Fig. 9: eine Seitendarstellung auf das flächige Haftverschlussteil nach der Fig. 8.

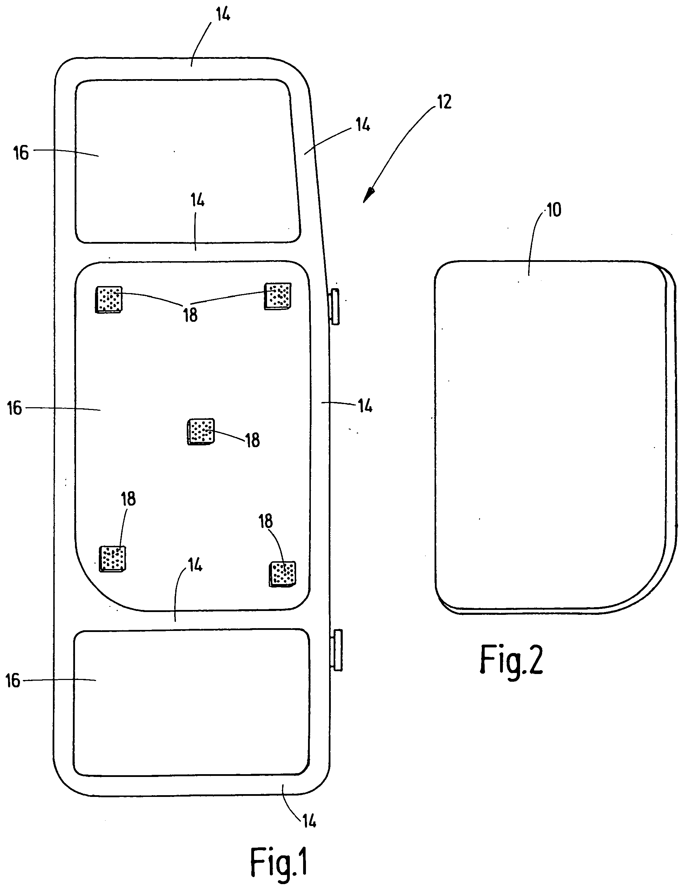

Das Befestigungssystem ist anhand eines in Fig. 1 und 2 gezeigten Ausführungsbeispieles näher erläutert. Das Befestigungssystem dient dem wieder lösbaren Anbringen eines zweiten Bauteils 10, hier eines Abdeckbauteils, beispielsweise ein mehrlagiges Holzpaneel, an einem ersten Bauteil 12, hier einem Karosseriebauteil, beispielsweise in Form der in Fig. 1 gezeigten Beladetür eines Transportbusses. Die dahingehende Tür besteht überwiegend aus Blechbauteilen, wobei einzelne Blechprofile 14 der Tür durch vertiefte Flächen 16 voneinander separiert sind. Die mittlere Fläche 16 dient der Aufnahme des in Fig. 2 gezeigten Abdeckbauteiles 10, indem dieses um eine fiktive Längsachse geklappt so auf das Karosseriebauteil 12 gelegt wird, dass die in Fig. 1 aufgezeigten Befestigungsteile 18 nicht mehr sichtbar sind, sondern vielmehr die rückwärtige, durchgehende Fläche des Abdeckbauteiles 10.

Anstelle der in Fig. 1 gezeigten fünf Befestigungsteile 18 können selbstredend in Abhängigkeit von der Ausgestaltung des jeweiligen Abdeckbauteiles 10 auch mehr oder weniger Befestigungsteile 18 zum Einsatz kommen. Vergleichbar zu den Flächen 16 zugeschnittene Abdeckbauteile 10 können vergleichbar in die obere und untere Fläche 16 der Blechtür eingesetzt werden, was der Einfachheit halber jedoch nicht dargestellt ist.

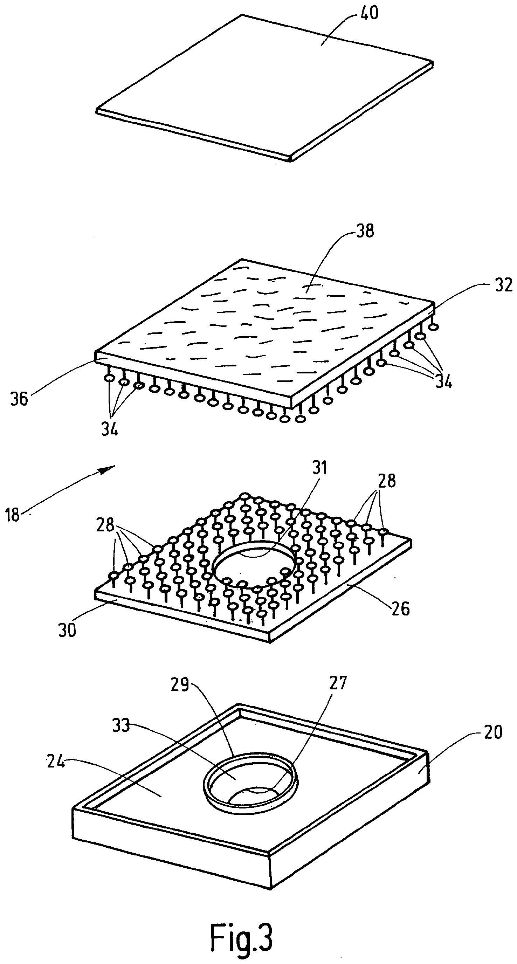

Die Fig. 3 zeigt ein Befestigungsteil 18 als Ganzes. Dieses ist in der Art eines Verbundes aus Einzelkomponenten aufgebaut, beginnend mit einem Distanzhalter 20. Dieser ist vorzugsweise in der Art eines Spritzgussteiles ausgebildet und besteht beispielsweise aus Polyamid-6-Material. Der Distanzhalter 20 hat eine rechteckförmige Kastenform mit einer Rahmenvertiefung 24 zur bündigen Aufnahme einer Trägerlage 26 mit den pilzkopfartigen Verschlusselementen 28 eines ersten Haftverschlussteils 30. Von der Baugröße her korrespondierend ist darüber angeordnet innerhalb des Verbundes ein zweites Haftverschlussteil 32 vorhanden, das in Blickrichtung auf die Fig. 3 gesehen auf seiner Unterseite gleichfalls pilzkopfartige Verschlusselemente 34 trägt, die entsprechend den Verschlusselementen 28 ausgebildet sind. Mithin können die Pilzköpfe 34 des zweiten Haftverschlussteils 32 in die von den Pilzköpfen 28 des ersten Haftverschlussteils 30 gebildeten Abstände in wieder lösbarer Weise zum Herstellen eines Haftverschlusses als Ganzes eingreifen. Die jeweiligen Pilzköpfe der genannten Verschlusselemente 28, 34 sind über Stengel oder Stiele mit der jeweiligen Trägerlage verbunden, wobei die Trägerlage des zweiten Haftverschlussteils 32 mit 36 bezeichnet ist. Anstelle der Pilzköpfe 34 für das zweite Haftverschlussteil 32 kann auch ein nicht näher dargestelltes Flauschmaterial treten, das dann entsprechend mit den Pilzen 28 des ersten Haftverschlussteils 30 im festgelegten Zustand verhakt. Ferner können die dahingehenden Pilzköpfe 28 auch in der Art eines Hakenverschlusses ausgebildet sein, und ferner kann man die Verschlusselemente auch tauschen, beispielsweise dergestalt, dass der Flausch am ersten Haftverschlussteil 30 angeordnet ist und die Pilze am zweiten Verschlussteil 32. Des Weiteren besteht die Möglichkeit, männliche Verschlusselemente, wie Haken, Pilze etc., mit weiblichen Verschlusselementen, wie Schlaufen, auf einer Seite eines Haftverschlussteils 30, 32 anzuordnen.

Auf der Rückseite des zweiten Haftverschlussteils 32 ist ein zweites Befestigungsmittel 38 vorhanden, vorzugsweise in Form eines Klebstoffes. Ein hierbei besonders bevorzugt zum Einsatz kommender Klebstoff ist ein drucksensitiver Klebstoff auf Acrylatbasis oder ein sogenannter Kunstkautschuk-Klebstoff. Zum Schutz der in Blickrichtung auf die Fig. 3 gesehen oberen Klebstoffschicht 38 ist eine abziehbare Schutzfolie 40 vorhanden, vorzugsweise in Form einer Polyethylenfolie.

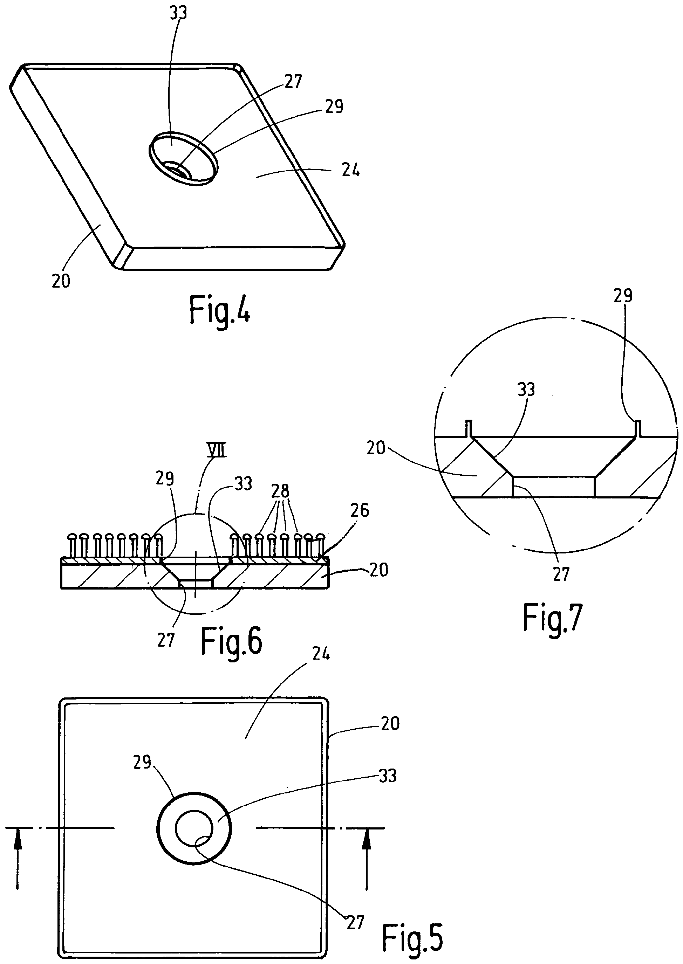

Der Verbund von Distanzhalter 20 mit den beiden Haftverschlussteilen 30 und 32 zusammen mit der Schutzfolie 40 bilden ein Befestigungsteil 18 nach der Fig. 1 aus. Dieser, die Befestigungsteile 18 bildende Verbund ist durch Verschrauben mit dem Karosseriebauteil 12 fest in der Weise verbunden, dass die Unterseite des Distanzhalters 20 an der in Blickrichtung auf die Fig. 1 gesehenen Oberseite der Fläche 16 des Karosseriebauteils 12 als erstes Bauteil anliegt. Entfernt man nun die Schutzfolie 40 von dem jeweiligen Verbund, lässt sich das Abdeckbauteil 10 als zweites Bauteil in Längsrichtung um 180° geklappt, an den Befestigungsteilen 18 an der Innenseite der Tür definiert festlegen. Die nähere Gestaltung der Verschraubung zur Festlegung des Distanzhalters 20 am Karosseriebauteil 12 wird unten anhand der Fig. 4 bis 7 näher erläutert.

Will man nun das Abdeckbauteil 10 vom Karosseriebauteil 12 lösen, zieht man das Abdeckbauteil 10 entsprechend von der Fläche 16 der Tür ab, wobei dann der Distanzhalter 20 und das erste Haftverschlussteil 30 an dem Karosseriebauteil 12 (Tür) als erstes Bauteil verbleiben, wohingegen das korrespondierende zweite Haftverschlussteil 32 am Abdeckbauteil 10 als zweites Bauteil verbleibt. Bei abgenommenem Abdeckbauteil 10 können dann entsprechende Wartungsarbeiten an der Tür vorgenommen werden. Im Übrigen ist das erste Haftverschlussteil 30 unverlierbar mittels eines nicht näher dargestellten Klebstoffes in der Rahmenvertiefung 24 des Distanzhalters 20 festgelegt, der vorzugsweise eine quadratische Querschnittsform aufweist.

Wie aus den Fig. 3 bis 7 erkennbar, weist der Distanzhalter 20 zur Bildung der Verschraubung im Zentralbereich der Rahmenvertiefung eine Bohrung 27 auf, deren den Verschlusselementen 28 zugewandter Öffnungsrand eine konische Erweiterung 33 als Sitz für den Kopf einer (nicht dargestellten) Senkkopfschraube bildet. In Anpassung an Form und Abmessung des nicht dargestellten Kopfes der Senkkopfschraube ist die konische Erweiterung 33 so gestaltet, dass der Kopf sich unterhalb der Verschlusselemente 28 befindet, vorzugsweise nicht über die Trägerlage 26 vorsteht. Somit wird der Verhakungseingriff durch die Senkkopfschraube nicht behindert. Wie insbesondere den Fig. 3, 4 und 7 deutlich entnehmbar ist, ist der Öffnungsrand der Bohrung 27 am Ende der Erweiterung 33 von einer konzentrischen Ringrippe 29 eingefasst, die aus der Fläche der Rahmenvertiefung 24 um eine Strecke vorsteht, die im Wesentlichen der Stärke der Trägerlage 26 entspricht, siehe Fig. 6. Bei auf der Fläche der Rahmenvertiefung 24 aufliegender Trägerlage 26 erstreckt sich die Ringrippe 29 zentrierend in eine Öffnung 31, die in der Trägerlage 26 mit einem den Außendurchmesser der Ringrippe 29 geringfügig übersteigenden Durchmesser ausgebildet ist.

Die jeweiligen Distanzhalter 20 lassen sich in der Bauhöhe unterschiedlich gestalten, um dergestalt ungleiche Baumaße, beispielsweise innerhalb des Karosseriebauteiles 12, ausgleichen zu können. Um eine vereinfachte Montage vor Ort sicherstellen zu können, können unterschiedliche Gruppen von Distanzhaltern 20 derart eingefärbt sein, dass eine Bauart beispielsweise mit der größeren Höhe blau eingefärbt ist und andere Distanzhalter 20 dann eine andere Farbe, beispielsweise grün, aufweisen.

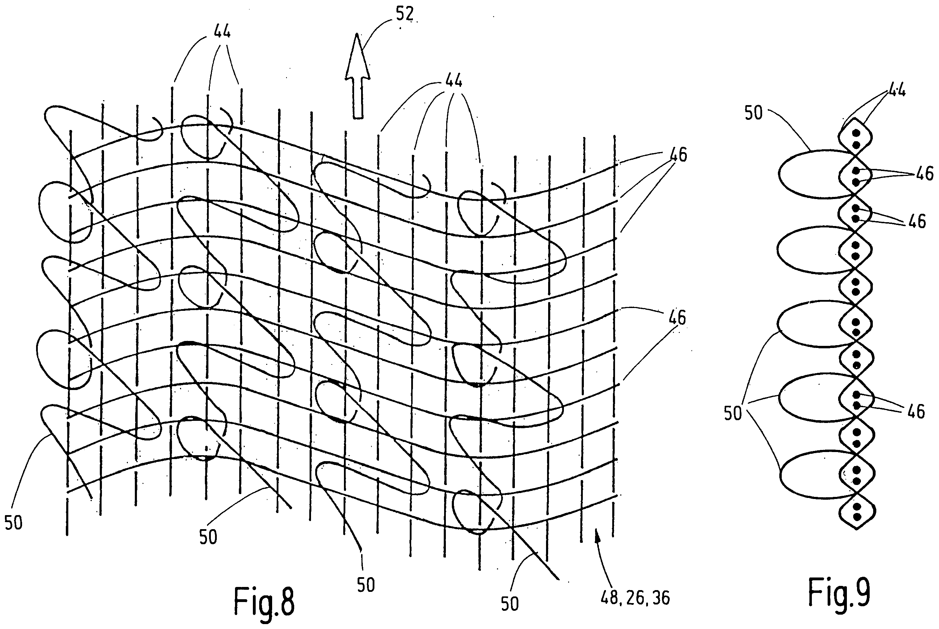

Die in Fig. 3 dargestellten beiden Haftverschlussteile 30, 32 lassen sich beispielsweise dadurch ausgestalten, dass man in eine plattenartige Trägerstruktur und mithin in die Trägerlage 26 stielartige Festlegeteile von der Rückseite her in hierfür vorgesehene Bohrungen einschießt, die in der Art eines krampenförmigen oder U-förmigen Festlegeelementes ausgebildet sind. Zur Bildung der pilzkopfartigen Verschlusselemente 28, 34 werden dann die freien, aus der Trägerlage 26 vorstehenden Stielenden der stielartigen Festlegeelemente wärmebehandelt und/oder mechanisch umgeformt und derart die charakteristische Kopfform erzielt. Auch können einzelne Stielelemente über eine aus der Computertechnik bekannte Beschickungsmaschine von der jeweils freien Stirnseite in entsprechende Ausnehmungen (Bohrungen) in der jeweiligen Trägerlage 26, 36 in diese eingesetzt werden, wobei die dahingehende Verbindung wiederum über einen entsprechenden Klebstoffauftrag erfolgen kann. Die pilzkopfartigen Verdickungen am freien Ende des jeweiligen Stengelteils erreicht man dann wiederum über ein bevorzugtes Wärmebehandlungs- oder mechanisches Umformverfahren. Ein bevorzugtes Verfahren zum Erhalt des entsprechenden Haftverschlussteils 30 und/oder 32 gibt jedoch die Ausführungsform nach den Fig. 8 und 9 wieder.

Die Fig. 8 zeigt ausschnittsweise eine Draufsicht auf ein flächenförmiges Haftverschlußteil 30 bzw. 32. Das Haftverschlussteil 30, 32 lässt sich innerhalb der Bildebene sowohl in der einen wie auch in der anderen Bildrichtung beliebig verlängern und die geometrischen Abmessungen des Flächengebildes sind abhängig von den Vorgaben der Webeinrichtung, auf der das Haftverschlussteil 30, 32 gefertigt wird. Das jeweilige Haftverschlussteil 30, 32 besteht bei der vorliegenden Ausführungsform aus Kettfäden 44 und Schussfäden 46, die in Queranordnung miteinander verwebt das Grundgewebe 48 für das Haftverschlussteil 30, 32 bilden. Das dahingehende Grundgewebe 48 bildet dann insoweit die jeweilige Trägerlage 26 bzw. 36 aus. Des Weiteren ist das Grundgewebe 48 mit sog. Funktionsfäden 50 in der Art von Polfäden ausgebildet. Der jeweilige Funktionsfaden 50 bildet dann für das flächenförmige Haftverschlußteil später die einzelnen pilzkopfartigen Verschlusselemente 28, 34 aus. Um die pilzkopfartigen Verschlusselemente 28, 34 zu erhalten, sind gemäß Darstellung nach der Fig. 9 dann die Polfäden 50 an ihrem oberen Bogen jeweils aufzutrennen und durch entsprechende Erwärmung formen sich die freien Stengelenden zu den gewünschten pilzförmigen Verschlusselementen 28, 34 um. Dergestalt entstehen dann die in Fig. 3 aufgezeigten Verschlusselemente.

Des Weiteren ist in Blickrichtung auf die Fig. 8 gesehen auf ihrer Oberseite mit einem Pfeil 52 die Produktionsrichtung für das jeweilige Haftverschlussteil 30, 32 wiedergegeben. Bei der gezeigten Anordnung nach der Fig. 8 sind die jeweiligen Schussfäden 46 in der Art einer Sinus- oder Kosinuswelle bogenförmig ausgebildet und an den Kreuzungsstellen zwischen Kettfäden 44 und Schussfäden 46 verlaufen die Kettfäden 44 parallel zur Produktionsrichtung 52 sowie parallel zueinander in geradliniger Anordnung. Anstelle der Sinus- oder Kosinuswelle können aber auch die Schussfäden 46 in geradliniger Form angeordnet sein, was die Produktion erleichtern hilft; allein mit der Wellen- oder Bogenform ist die in einer Richtung verlaufende lineare Orientierung an Verschlusselementen 28, 34 des Haftverschlusses vermieden und eine bogenförmige, sinusartige Anordnung bringt einen definierten Widerstand der Außer-Eingriff-Bewegung der korrespondierenden Verschlusselemente 28, 34 entgegen, so dass dergestalt die Haltekräfte im wesentlichen konstant und derart auch berechenbar sind.

Aus dem derart hergestellten Flächenverbund lassen sich die einzelnen Verschlussteile 30, 32 ausschneiden, oder das Webverfahren ist derart ausgelegt, dass gleich die benötigte quadratische Grundform erreicht ist. Anstelle des aufgezeigten Webverfahrens kann der vorgestellte Verschluss auch in gestrickter Form vorliegen.

Es versteht sich, dass, anders als hier in Fig. 1 und 2 beispielhaft dargestellt, die Befestigungsteile 18 mit den Distanzhaltern 20 am Abdeckbauteil 10 als erstes Bauteil durch Verschrauben fest angebracht sein könnten, wobei die Haftverschlussteile 32 seitens des Karosseriebauteils 12 als zweites Bauteil vorgesehen wären.

## Patentansprüche

1. Befestigungssystem zum wieder lösbaren Festlegen eines zweiten Bauteils (10) an einem ersten Bauteil (12), wie dem Anbringen eines Abdeckbauteils an einem Karosseriebauteil, mit mindestens einem Distanzhalter (20), der an seiner einen Seite mittels eines ersten Befestigungsmittels am ersten Bauteil (10) festlegbar ist und auf seiner gegenüberliegenden Seite mit einem ersten Haftverschlussteil (30) versehen ist, das mit einem korrespondierenden zweiten Haftverschlussteil (32) wieder lösbar in Eingriff bringbar ist, das auf seiner den Verschlusselementen (28, 34) des ersten Haftverschlussteils (30) bzw. zweiten Haftverschlussteils (32) abgewandten Seite mittels eines zweiten Befestigungsmittels (38) am zweiten Bauteil (10) festlegbar ist, wobei der Distanzhalter (20) mittels einer das erste Befestigungsmittel bildenden Verschraubung am ersten Bauteil (12) festlegbar ist, wobei der Distanzhalter (20) zur Bildung der Verschraubung eine Bohrung (27) aufweist, deren den Verschlusselementen (28) zugewandter Öffnungsrand eine konische Erweiterung (33) aufweist, in der der Kopf einer Senkkopfschraube so aufnehmbar ist, dass sich das obere Ende des Kopfes unterhalb der Verschlusselemente (28) befindet, wobei der Öffnungsrand der Bohrung (27) von einer zur Bohrung (27) konzentrischen Ringrippe (29) umgeben ist, deren Höhe gleich wie oder geringer ist als die Stärke einer Trägerlage (26) der Verschlusselemente (28), und wobei das erste Haftverschlussteil (30) eine die Trägerlage (26) durchdringende, runde Öffnung (31) aufweist, in der die Ringrippe (29) am Öffnungsrand der Bohrung (27) zentrierend aufnehmbar ist.

2. Befestigungssystem nach Anspruch 1, **dadurch gekennzeichnet, dass** der Distanzhalter (20) aus einem Rahmenteil besteht, das eine rechteckförmige Kastenform hat, mit einer Rahmenvertiefung (24) zur bündigen Aufnahme einer Trägerlage (26) der Verschlusselemente (28) des ersten Haftverschlussteils (30), und dass die Bohrung (27) im Zentralbereich der Rahmenvertiefung (24) gebildet ist.

3. Befestigungssystem nach Anspruch 2, **dadurch gekennzeichnet, dass** der Öffnungsrand der Bohrung (27) von der aus der Fläche der Rahmenvertiefung (24) vorstehenden Ringrippe (29) umgeben ist.

4. Befestigungssystem nach einem der vorstehenden Ansprüche, **dadurch gekennzeichnet, dass** die jeweiligen Verschlusselemente (28, 34) von erstem Haftverschlussteil (30) und korrespondierendem zweiten Haftverschlussteil (32) pilzkopfartig ausgebildet sind, und dass die Pilzköpfe des ersten Haftverschlussteils (30) in die von den Pilzköpfen des zweiten Haftverschlussteils (32) gebildeten Abstände wieder lösbar eingreifen.

## Claims

1. A fastening system for releasably fixing a second component (10) on a first component (12), such as attaching a covering component to a component of a vehicle body, with at least one spacer (20) which can be fixed, on its one side, to the first component (10) by means of a first fastening means, and is provided on its opposite side with a first touch-and-close fastener part (30) which can be brought into releasable engagement with a corresponding second touch-and-close fastener part (32) which, on its side which faces away from the fastener elements (28, 34) of the first touch-and-close fastener part (30) and second touch-and-close fastener part (32) respectively, can be fixed on the second component (10) by means of a second fastening means (38), wherein the spacer (20) can be fixed on the first component (12) by means of a screw connection which forms the first fastening means, wherein the spacer (20) has a drilled hole (27) for forming the screw connection, the opening edge of which drilled hole faces the fastener elements (28) and has a conical expansion (33) in which the head of a countersunk head screw can be received such that the upper end of the head is located below the fastener elements (28),
wherein the opening edge of the drilled hole (27) is surrounded by an annular rib (29) which is concentric to the drilled hole (27), the height of which annular rib is equal to or less than the thickness of a substrate layer (26) of the fastener elements (28), and
wherein the first touch-and-close fastener part (30) has a round opening (31) penetrating the substrate layer (26), in which opening the annular rib (29) can be received in a centring manner at the opening edge of the drilled hole (27).

2. The fastening system according to claim 1, **characterised in that** the spacer (20) consists of a frame part which has a rectangular box shape, with a frame depression (24) for the flush reception of a substrate layer (26) of the fastener elements (28) of the first touch-and-close fastener part (30), and that the drilled hole (27) is formed in the central region of the frame depression (24).

3. The fastening system according to claim 2, **characterised in that** the opening edge of the drilled hole (27) is surrounded by the annular rib (29) projecting from the surface of the frame depression (24).

4. The fastening system according to one of the preceding claims, **characterised in that** the respective fastener elements (28, 34) of the first touch-and-close fastener part (30) and corresponding second touch-and-close fastener part (32) are formed as mushroom heads, and that the mushroom heads of the first touch-and-close fastener part (30) releasably engage in the spaces formed by the mushroom heads of the second touch-and-close fastener part (32).

## Revendications

1. Système de fixation pour la fixation de manière redétachable d'une deuxième pièce (10) à une première pièce (12), comme le montage d'une pièce de recouvrement sur une pièce de carrosserie, comprenant au moins un mainteneur (10) à distance, qui, par l'une de ses faces, peut être fixé à la première pièce (10) à l'aide d'un premier moyen de fixation et qui est pourvu, sur sa face opposée, d'une première partie (30) de fermeture auto-agrippante, qui peut être mise en prise de manière redétachable avec une deuxième partie (32) correspondante de fermeture auto-agrippante, qui, sur sa face loin des éléments (28, 34) de fermeture de la première partie (30) de fermeture auto-agrippante ou de la deuxième partie (32) de fermeture auto-agrippante, peut être fixée à la deuxième pièce (10) à l'aide d'un deuxième moyen (38) de fixation, le mainteneur (20) à distance pouvant être fixé à la pièce (12) à l'aide d'un vissage formant le premier moyen de fixation, le mainteneur (20) à distance ayant, pour la formation du vissage, un trou (27), dont le bord d'ouverture tourné vers les éléments (28) de fermeture a un élargissement (33) conique, dans lequel la tête d'une vis à tête noyée peut être reçue de manière à ce que l'extrémité supérieure de la tête se trouve en dessous des éléments (28) de fermeture, dans lequel le bord d'ouverture du trou (27) est entouré d'une nervure (29) annulaire concentrique au trou (27), dont la hauteur est inférieure ou égale à l'épaisseur d'une couche (26) de support des éléments (28) de fermeture et dans lequel la première partie (30) de fermeture auto-agrippante a une ouverture (31) circulaire, qui traverse la couche (26) de support et dans laquelle la nervure (26) annulaire au bord de l'ouverture du trou (27) peut être reçue de manière centrée.

2. Système de fixation suivant la revendication 1, **caractérisé en ce que** le mainteneur (30) à distance est constitué d'une partie de cadre, qui a une forme de caisson rectangulaire ayant une cavité (24) de cadre pour la réception à affleurement d'une couche (26) de support des éléments (28) de fermeture de la première partie (30) de fermeture auto-agrippante, et **en ce que** le trou (27) est formé dans la partie centrale de la cavité (24) du cadre.

3. Système de fixation suivant la revendication 2, **caractérisé en ce que** le bord de l'ouverture du trou (27) est entouré de la nervure (29) annulaire en saillie de la surface de la cavité (24) du cadre.

4. Système de fixation suivant l'une des revendications précédentes, **caractérisé en ce que** les éléments (28, 34) de fermeture respectifs de la première partie (30) de fermeture auto-agrippante et de la deuxième partie (32) correspondante de fermeture auto-agrippante sont du type à tête de champignon et **en ce que** les têtes de champignon de la première partie (30) de fermeture auto-agrippante pénètrent de manière redétachable dans les intervalles formés par les têtes de champignon de la deuxième partie (32) de fermeture auto-agrippante.
